# EUROPEAN PATENT APPLICATION

(11) **EP 2 800 344 A1**
(43) Date of publication of application: **05.11.2014**
(21) Application number: 12863984.6
(22) Date of filing: 23.02.2012
(51) Int. Cl.: H04M 1/725, G06F 15/02

(54) **MESSAGE REMINDING METHOD AND APPARATUS**

(30) Priority: 29.12.2011 CN 201110452150
(71) Applicant: ZTE Corporation, Shenzhen, Guangdong 518057 (CN)
(72) Inventor: FAN, Chao, Shenzhen Guangdong 518057 (CN)
(74) Representative: D'Halleweyn, Nele Veerle Trees Gertrudis
(86) International application number: PCT/CN2012/071504
(87) International publication number: WO 2013/097333

(57) **Abstract**

The present invention provides an information reminding method and device, wherein the method includes: acquiring a standby time of an information reminding device; acquiring a first time length between a reminding moment of information for reminding and an acquiring moment of the standby time; judging whether the standby time is less than or equal to the first time length; and if the standby time is less than or equal to the first time length, giving advance reminder of the information for reminding. The present invention solves the problem that a mobile phone fails to give reminder of the to-do events which is caused by the mobile phone running out of power and powering off in the related technologies, so that the real-time performance, the validity and the value of information reminding are improved, and the user experience is improved.

## Description

### Technical Field

The present invention relates to the technical field of mobile phones, and specifically, to an information reminding method and device.

### Background

Nowadays, mobile phones have become an essential part in people's working, living and learning. Along with great advances in the mobile communication technology and the arrival of the 4G era, both the performance and the function have been greatly improved in both hardware and software aspects of mobile phones. Nowadays, a mobile phone is not only a communication tool, more importantly, it brings about much convenience to the user's daily life.

A user may set an event to be processed afterwards in a calendar of an existing mobile phone, that is, back up the event needing subsequent processing so that the event will not be forgotten. When the set event time arrives, the user will be prompted by means of alarm reminding, etc.; however, if the user powers off the mobile phone actively or the mobile phone runs out of power and powers off automatically, the user will not be reminded of the to-do event in the calendar by means of alarm any more, but will be reminded by means of missed event after the mobile phone is powered on again instead. But this after-the-event reminding approach does not have much value for the user because the event processing time has been missed, and even though the user is reminded of the event, the event cannot be processed, especially when the to-do activity and task is an event that is very important and must be accomplished on time, this after-the-event reminding approach will bring about much inconvenience to the user, and at the same time, also make event reminding lose the value of reminding.

### Summary

The present invention provides an information reminding method and device so as to at least solve the problem that a mobile phone fails to give reminder of the to-do events which is caused by the mobile phone running out of power and powering off in the related technologies.

According to one aspect of the present invention, an information reminding method is provided, including: acquiring a standby time of an information reminding device; acquiring a first time length between a reminding moment of information for reminding and an acquiring moment of the standby time; judging whether the standby time is less than or equal to the first time length; and if the standby time is less than or equal to the first time length, giving advance reminder of the information for reminding.

Preferably, acquiring the standby time of the information reminding device includes: acquiring a remaining battery capacity of the information reminding device; and calculating the standby time of the information reminding device according to the acquired remaining battery capacity.

Preferably, acquiring the first time length between the reminding moment of the information for reminding and the acquiring moment of the standby time includes: reading reminding moments of all information for reminding in the information reminding device; respectively calculating time lengths between the reminding moments of all the information for reminding and the acquiring moment of the standby time; and using a minimum value in the time lengths acquired via calculation as the first time length.

Preferably, after judging whether the standby time is less than or equal to the first time length, the method further includes: if the standby time is greater than the first time length, acquiring a current standby time of the information reminding device at preset time intervals; acquiring, when acquiring the current standby time of the information reminding device, a second time length between the reminding moment of the information for reminding and an acquiring moment of the current standby time; judging whether the current standby time is less than or equal to the second time length; and if the current standby time is less than or equal to the second time length, giving advance reminder of the information for reminding.

Preferably, after judging whether the standby time is less than or equal to the first time length, the method further includes: if the standby time is greater than the first time length, judging whether the standby time is less than or equal to a third time length, wherein the third time length is a maximum time length between the reminding moments of all the information for reminding and the acquiring moment of the standby time; if the standby time is less than or equal to the third time length, giving advance reminder of the information for reminding, a time length between the reminding moment of which and the acquiring moment of the standby time is greater than the standby time; if the standby time is greater than the third time length, acquiring a current standby time of the information reminding device at preset time intervals; acquiring, when acquiring the current standby time of the information reminding device, a fourth time length between the reminding moment of the information for reminding and the acquiring moment of the current standby time, wherein the fourth time length is a minimum time length between the reminding moments of the all the information for reminding and the acquiring moment of the current standby time; judging whether the current standby time is less than or equal to the fourth time length; and if the current standby time is less than or equal to the fourth time length, giving advance reminder of the information for reminding.

Preferably, the information reminding method further includes: judging whether indication information of turning off the information reminding device is received; and if the indication information is received, giving reminder of the information for reminding in the information reminding device.

Preferably, the information for reminding includes information for reminding specified to need advance reminder in multiple pieces of information for reminding.

According to another aspect of the present invention, an information reminding device is provided, including: a first acquiring unit configured to acquire a standby time of the information reminding device; a second acquiring unit configured to acquire a first time length between a reminding moment of information for reminding and an acquiring moment of the standby time; a first judging unit configured to judge whether the standby time is less than or equal to the first time length; and a first processing unit configured to give advance reminder of the information for reminding if the standby time is less than or equal to the first time length.

Preferably, the first acquiring unit includes: an acquiring module configured to acquire a remaining battery capacity of the information reminding device; and a first calculating module configured to calculate the standby time of the information reminding device according to the acquired remaining battery capacity.

Preferably, the second acquiring unit includes: a reading module configured to read reminding moments of all information for reminding in the information reminding device; and a second calculating module configured to respectively calculate time lengths between the reminding moments of all the information for reminding and the acquiring moment of the standby time, and use a minimum value in the time lengths acquired via calculation as the first time length.

Preferably, the information reminding device further includes: a third acquiring unit configured to acquire, if the standby time is greater than the first time length, a current standby time of the information reminding device at preset time intervals; a fourth acquiring unit configured to acquire, when acquiring the current standby time of the information reminding device, a second time length between the reminding moment of the information for reminding and the acquiring moment of the current standby time; a second judging unit configured to judge whether the current standby time is less than or equal to the second time length; and a second processing unit configured to give advance reminder of the information for reminding when the current standby time is less than or equal to the second time length.

Preferably, the information reminding device further includes: a third judging unit configured to judge, if the standby time is greater than the first time length, whether the standby time is less than or equal to a third time length, wherein the third time length is a maximum time length between the reminding moments of all the information for reminding and the acquiring moment of the standby time; a third processing unit configured to give, when the standby time is less than or equal to the third time length, advance reminder of the information for reminding, the time length between the reminding moment of which and the acquiring moment of the standby time is greater than the standby time; a fifth acquiring unit configured to acquire, if the standby time is greater than the third time length, a current standby time of the information reminding device at preset time intervals; a sixth acquiring unit configured to acquire, when acquiring the current standby time of the information reminding device, a fourth time length between the reminding moment of the information for reminding and the acquiring moment of the current standby time, wherein the fourth time length is a minimum time length between the reminding moments of all the information for reminding and the acquiring moment of the current standby time; a fourth judging unit configured to judge whether the current standby time is less than or equal to the fourth time length; and a fourth processing unit configured to give advance reminder of the information for reminding when the current standby time is less than or equal to the fourth time length.

Preferably, the information reminding device further includes: a fifth judging unit configured to judge whether indication information of turning off the information reminding device is received; and a fifth processing unit configured to give reminder of the information for reminding in the information reminding device when the indication information of turning off the information reminding device is judged to be received.

In the present invention, the standby time of the information reminding device is calculated in advance, and the first time length between the reminding moment of the information for reminding and the acquiring moment of the standby time is calculated, then the standby time is compared with the first time length, when the standby time is less than or equal to the first time length, that is, the reminding moment of the information for reminding is later than the power off moment of the information reminding device, advance reminder of the information for reminding is given to avoid the power off time, the information for reminding is prompted in real time and effectively to avoid missing the processing time of the information for reminding, and the problem that a mobile phone fails to give reminder of the to-do events which is caused by the mobile phone running out of power and powering off in the related technologies is solved, so that the real-time performance, the validity and the value of the information reminding are improved, and the user experience is improved.

### Description of drawings

Drawings, provided for further understanding of the present invention and forming a part of the specification, are used to explain the present invention together with embodiments of the present invention rather than to limit the present invention. In the drawings:
Fig. 1 is a preferred structure diagram of an information reminding device according to an embodiment of the present invention;
Fig. 2 is another preferred structure diagram of an information reminding device according to an embodiment of the present invention;
Fig. 3 is another preferred structure diagram of an information reminding device according to an embodiment of the present invention;
Fig. 4 is a preferred structure diagram of a first acquiring unit according to an embodiment of the present invention;
Fig. 5 is a preferred structure diagram of a second acquiring unit according to an embodiment of the present invention;
Fig. 6 is a still another preferred structure diagram of an information reminding device according to an embodiment of the present invention;
Fig. 7 is a preferred flow chart of an information reminding method according to an embodiment of the present invention;
Fig. 8 is another preferred flow chart of an information reminding method according to an embodiment of the present invention;
Fig. 9 is a preferred schematic diagram of an information reminding approach according to an embodiment of the present invention; and
Fig. 10 is another preferred schematic diagram of an information reminding approach according to an embodiment of the present invention.

### Detailed Description of the Embodiments

The present invention is described below with reference to the accompanying drawings and embodiments in detail. Note that, the embodiments of the present invention and the features of the embodiments can be combined with each other if there is no conflict.

In the following embodiments, communication may be realized by a wireless connection or a wired connection or a combination of the two, on which the present invention makes no definition.

### Embodiment 1

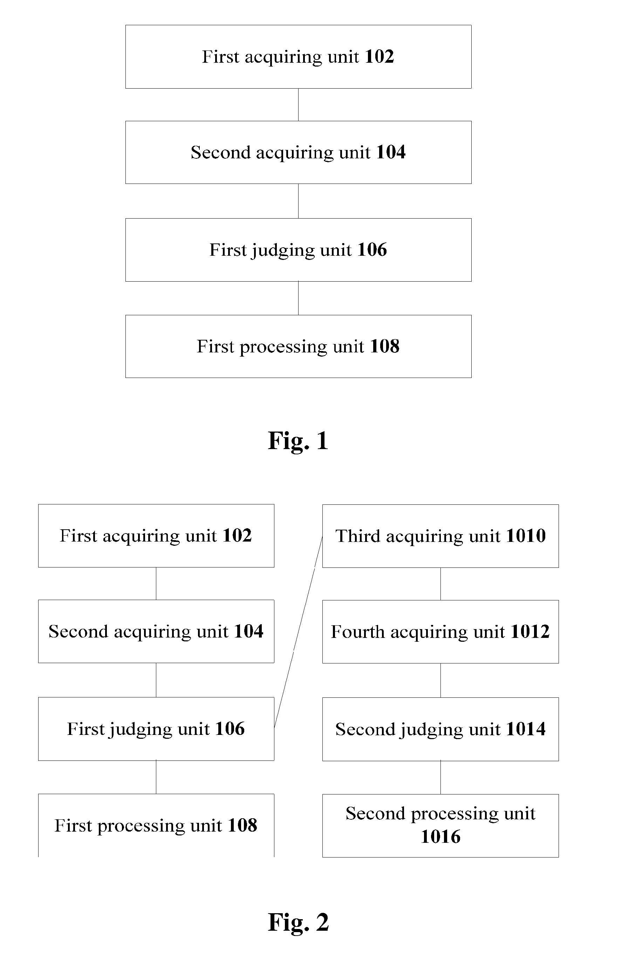

Fig. 1 is a preferred structure diagram of an information reminding device according to an embodiment of the present invention. As shown in Fig. 1, the information reminding device includes: a first acquiring unit **102** configured to acquire a standby time of the information reminding device; a second acquiring unit **104** which is in communication with the first acquiring unit **102** and is configured to acquire a first time length between a reminding moment of information for reminding and an acquiring moment of the standby time (the moment when the standby time is acquired); a first judging unit **106** which is in communication with the second acquiring unit **104** and is configured to judge whether the standby time is less than or equal to the first time length; and a first processing unit **108** which is in communication with the first judging unit **106** and is configured to give advance reminder of the information for reminding if the standby time is less than or equal to the first time length.

In the above-mentioned preferred embodiment, the standby time of the information reminding device is calculated in advance, and the first time length between the reminding moment of the information for reminding and the acquiring moment of the standby time is calculated, then the standby time is compared with the first time length, when the standby time is less than or equal to the first time length, that is, the reminding moment of the information for reminding is later than the power off moment of the information reminding device, advance reminder of the information for reminding is given to avoid the power off time, the information for reminding is prompted in real time and effectively to avoid missing the processing time of the information for reminding, and the problem that a mobile phone fails to give reminder of the to-do events which is caused by the mobile phone running out of power and powering off in the related technologies is solved, so that the real-time performance, the validity and the value of the information reminding are improved, and the user experience is improved.

On the basis of the above-mentioned preferred embodiment, the present invention improves the above-mentioned information reminding device. As shown in Fig. 2, the information reminding device includes: a third acquiring unit **1010** configured to acquire a current standby time of the information reminding device at preset time intervals if the standby time is greater than the first time length; a fourth acquiring unit **1012** which is in communication with the third acquiring unit **1010** and is configured to acquire, when acquiring the current standby time of the information reminding device, a second time length between the reminding moment of the information for reminding and the acquiring moment of the current standby time; a second judging unit **1014** which is in communication with the fourth acquiring unit **1012** and is configured to judge whether the current standby time is less than or equal to the second time length; and a second processing unit **1016** which is in communication with the second judging unit **1014** and is configured to give advance reminder of the information for reminding if the current standby time is less than or equal to the second time length. In the present embodiment, when the standby time is greater than the first time length, the current standby time of the information reminding device and a second time length between the reminding moment of the information for reminding and the acquiring moment of the current standby time are acquired at preset time intervals so as to compare and judge whether the current standby time is less than or equal to the second time length, so that the real-time tracking and acquisition of the current standby time of the information reminding device and the second time length between the reminding moment of the information for reminding and the acquiring moment of the current standby time is realized, and advance reminder of the information for reminding can be given in real time and effectively when the current standby time is less than or equal to the second time length, thereby avoiding missing the processing of the information for reminding, and improving the real-time performance, validity and accuracy of information reminding.

Further more, in the above-mentioned preferred embodiment, different time intervals may be set according to different requirements. For example, when the information reminding device has a great power consumption and a fast changing standby time, the time interval may be set to be smaller, such as a few minutes; when the information for reminding is very important and the standby time is very short, the time interval may also be a few minutes; and when the standby time is very long and the information for reminding is not very important, the time interval may be a few hours, so as to ensure that the processing of the information for reminding will not be missed, thereby enhancing the use flexibility of the present invention.

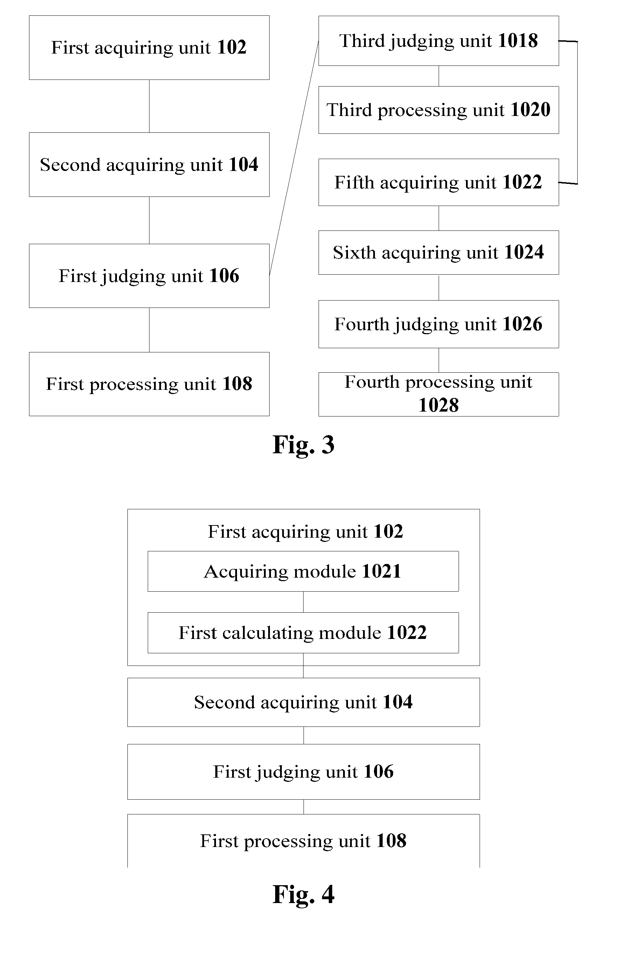

On the basis of the above-mentioned preferred embodiments, the present invention further improves the above-mentioned information reminding device. As shown in Fig. 3, the information reminding device includes: a third judging unit **1018** configured to judge, when the standby time is greater than the first time length, whether the standby time is less than or equal to a third time length, wherein the third time length is the maximum time length between the reminding moments of all the information for reminding and the acquiring moment of the standby time; a third processing unit **1020** which is in communication with the third judging unit **1018** and is configured to give, when the standby time is less than or equal to the third time length, advance reminder of the information for reminding of which the time length between the reminding moment thereof and the acquiring moment of the standby time is greater than the standby time; the fifth acquiring unit **1022** which is in communication with the third judging unit **1018** and is configured to acquire, if the standby time is greater than the third time length, the current standby time of the information reminding device at preset time intervals; a sixth acquiring unit **1024** which is in communication with the fifth acquiring unit **1022** and is configured to acquire, when acquiring the current standby time of the information reminding device, a fourth time length between the reminding moment of the information for reminding and the acquiring moment of the current standby time, wherein the fourth time length is the minimum time length between the reminding moments of all the information for reminding and the acquiring moment of the current standby time; a fourth judging unit **1026** which is in communication with the sixth acquiring unit **1024** and is configured to judge whether the current standby time is less than or equal to the fourth time length; and a fourth processing unit **1028** which is in communication with the fourth judging unit **1026** and is configured to give advance reminder of the information for reminding when the current standby time is less than or equal to the second time length. In the present embodiment, when the standby time is greater than the first time length, judging the relationship between the standby time and the maximum time length (i.e. the third time length) between the reminding moments of all the information for reminding and the acquiring moment of the standby time, giving advance reminder of the information for reminding of which the time length between the reminding moment thereof and the acquiring moment of the standby time is greater than the standby time, so that the missing the processing of some of the information for reminding (for example, some of the information for reminding refers to the information for reminding of which the time length between the reminding moment thereof and the acquiring moment of the standby time is greater than the standby time) is avoided when multiple pieces of information for reminding are stored in the information reminding device and the standby time is greater than the first time length, thus the accuracy of information reminding and the using value of information reminding are improved. At the same time, when the standby time is greater than the third time length, the current standby time of the information reminding device and the fourth time length between the reminding moment of the information for reminding and the acquiring moment of the current standby time are tracked and acquired in real time at preset time intervals, so that advance reminder of the information for reminding can be given in real time and effectively when the current standby time is less than or equal to the fourth time length, thereby avoiding missing the processing of the information for reminding, and improving the real-time performance, validity and accuracy of information reminding.

Further more, in the above-mentioned preferred embodiment, different time intervals may be set according to different requirements. For example, when the information reminding device has a great power consumption and a fast changing standby time, the time interval may be set to be smaller, such as a few minutes; when the information for reminding is very important and the standby time is very short, the time interval may also be a few minutes; and when the standby time is very long and the information for reminding is not very important, the time interval may be a few hours, so as to ensure that the processing of the information for reminding will not be missed, thereby enhancing the use flexibility of the present invention.

On the basis of the above-mentioned preferred embodiments, the present invention provides a preferred first acquiring unit **102**. As shown in Fig. 4, the first acquiring unit **102** includes: an acquiring module **1021** configured to acquire the remaining battery capacity of the information reminding device; and a first calculating module **1022** which is in communication with the acquiring module **1021** and is configured to calculate the standby time of the information reminding device according to the acquired remaining battery capacity. In the present embodiment, preferably, the standby time of the information reminding device may be calculated according to the remaining battery capacity of the information reminding device when the information reminding device is started, so as to give advance reminder of the information for reminding before the information reminding device powers off due to low power, and avoid missing the processing of the information for reminding, thereby improving the validity of information reminding and improving the using value of information reminding.

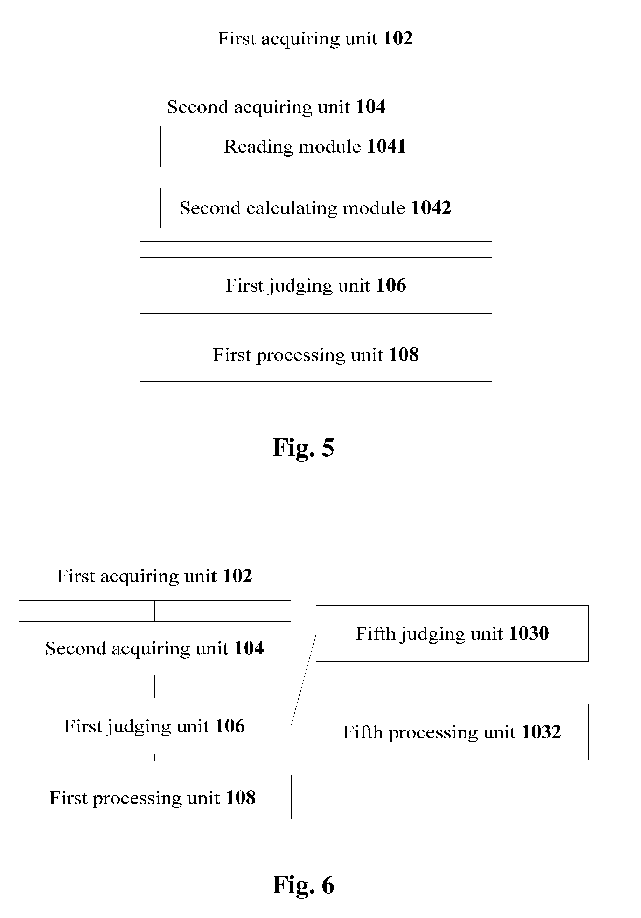

On the basis of the above-mentioned preferred embodiments, the present invention provides a preferred second acquiring unit **104**. As shown in Fig. 5, the second acquiring unit **104** includes: a reading module **1041** configured to read reminding moments of all the information for reminding in the information reminding device; a second calculating module **1042** which is in communication with the reading module **1041** and is configured to respectively calculate time lengths between the reminding moments of all the information for reminding and the acquiring moment of the standby time, and use the minimum value in the time lengths acquired via calculation as the first time length. In the present embodiment, time lengths between the reminding moments of all the information for reminding and the acquiring moment of the standby time are acquired, and the minimum value in the acquired time lengths is used as the first time length, so as to ensure that advance reminder of the information for reminding is given before the information reminding device powers off due to low power, and the missing of the processing of the information for reminding is avoided, thereby improving the validity of information reminding and improving the using value of information reminding.

On the basis of the above-mentioned preferred embodiments, the present invention further improves the above-mentioned information reminding device. As shown in Fig. 6, the information reminding device includes: a fifth judging unit **1030** configured to judge whether indication information of turning off the information reminding device is received; and a fifth processing unit **1032** which is in communication with the fifth judging unit **1030** and is configured to give reminder of the information for reminding in the information reminding device when the indication information of turning off the information reminding device is judged to be received. In the present embodiment, when the indication information of turning off the information reminding device is received, reminder of the information for reminding is given so as to avoid missing the processing of the information for reminding due to actively powering off of the information reminding device, thereby improving the validity and applicability of information reminding.

Further more, on the basis of the above-mentioned preferred embodiments, when giving reminder of the information for reminding, the information for reminding needing advance reminder may be set in advance. For example, important or essential information for reminding are selected from multiple pieces of information for reminding and subjected to advance reminder, so as to avoid missing the processing of the important information for reminding, at the same time, avoid giving advance reminder of a large amount of information for reminding. The user selects important information for reminding from the large amount of information for reminding, thereby reducing the work load of information reminding.

### Embodiment 2

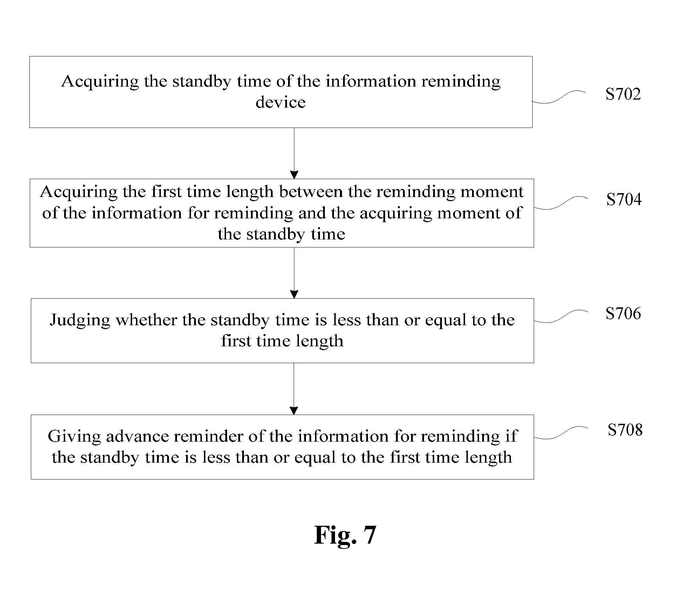

On the basis of figures 1-6, the present invention provides a preferred information reminding method. As shown in Fig. 7, the information reminding method includes:
S702: a standby time of an information reminding device is acquired;
S704: a first time length between a reminding moment of information for reminding and an acquiring moment of the standby time is acquired;
S706: whether the standby time is less than or equal to the first time length is judged; and
S708: if the standby time is less than or equal to the first time length, advance reminder of the information for reminding is given.

In the above-mentioned preferred embodiment, the standby time of the information reminding device is calculated in advance, and the first time length between the reminding moment of the information for reminding and the acquiring moment of the standby time is calculated, then the standby time is compared with the first time length, when the standby time is less than or equal to the first time length, that is, the reminding moment of the information for reminding is later than the power off moment of the information reminding device, advance reminder of the information for reminding is given to avoid the power off time, the information for reminding is prompted in real time and effectively to avoid missing the processing time of the information for reminding, and the problem that a mobile phone fails to give reminder of the to-do events which is caused by the mobile phone running out of power and powering off in the related technologies is solved, so that the real-time performance, the validity and the value of the information reminding are improved, and the user experience is improved.

On the basis of the above-mentioned preferred embodiment, the present invention improves the above-mentioned information reminding method. Specifically, the information reminding method includes: after whether the standby time is less than or equal to the first time length is judged, if the standby time is greater than the first time length, the current standby time of the information reminding device is acquired at preset time intervals; when acquiring the standby time of the information reminding device, a second time length between the reminding moment of the information for reminding and the acquiring moment of the current standby time is acquired; whether the current standby time is less than or equal to the second time length is judged; and if the current standby time is less than or equal to the second time length, advance reminder of the information for reminding is given. In the present embodiment, when the standby time is greater than the first time length, the current standby time of the information reminding device and a second time length between the reminding moment of the information for reminding and the acquiring moment of the current standby time are acquired at preset time intervals so as to compare and judge whether the current standby time is less than or equal to the second time length, so that the real-time tracking and acquisition of the current standby time of the information reminding device and the second time length between the reminding moment of the information for reminding and the acquiring moment of the current standby time is realized, and advance reminder of the information for reminding can be given in real time and effectively when the current standby time is less than or equal to the second time length, thereby avoiding missing the processing of the information for reminding, and improving the real-time performance, validity and accuracy of information reminding.

Further more, in the above-mentioned preferred embodiment, different time intervals may be set according to different requirements. For example, when the information reminding device has a great power consumption and a fast changing standby time, the time interval may be set to be smaller, such as a few minutes; when the information for reminding is very important and the standby time is very short, the time interval may also be a few minutes; and when the standby time is very long and the information for reminding is not very important, the time interval may be a few hours, so as to ensure that the processing of the information for reminding will not be missed, thereby enhancing the use flexibility of the present invention.

On the basis of the above-mentioned preferred embodiment, the present invention further improves the above-mentioned information reminding method. Specifically, the information reminding method includes: after whether the standby time is less than or equal to the first time length is judged, if the standby time is greater than the first time length, whether the standby time is less than or equal to a third time length is judged, wherein the third time length is the maximum time length between the reminding moments of all the information for reminding and the acquiring moment of the standby time; if the standby time is less than or equal to the third time length, advance reminder of the information for reminding, the time length between the reminding moment of which and the acquiring moment of the standby time is greater than the standby time, is given; and if the standby time is greater than the third time length, the current standby time of the information reminding device is acquired at preset time intervals; when acquiring the current standby time of the information reminding device, a fourth time length between the reminding moment of the information for reminding and the acquiring moment of the current standby time is acquired, wherein the fourth time length is the minimum time length between the reminding moments of all the information for reminding and the acquiring moment of the current standby time; whether the current standby time is less than or equal to the fourth time length is judged; and if the current standby time is less than or equal to the fourth time length, advance reminder of the information for reminding is given. In the present embodiment, when the standby time is greater than the first time length, the relationship between the standby time and the maximum time length (i.e. the third time length) between the reminding moments of all the information for reminding and the acquiring moment of the standby time is determined, advance reminder of the information for reminding, the time length between the reminding moment of which and the acquiring moment of the standby time is greater than the standby time, is given, so that the missing the processing of some of the information for reminding (for example, some of the information for reminding refers to the information for reminding, the time length between the reminding moment of which and the acquiring moment of the standby time is greater than the standby time) is avoided when multiple pieces of information for reminding are stored in the information reminding device and the standby time is greater than the first time length, thus the accuracy and the using value of information reminding is improved. At the same time, when the standby time is greater than the third time length, the current standby time of the information reminding device and the fourth time length between the reminding moment of the information for reminding and the acquiring moment of the current standby time are tracked and acquired in real time at preset time intervals, so that advance reminder of the information for reminding can be given in real time and effectively when the current standby time is less than or equal to the fourth time length, thereby avoiding missing the processing of the information for reminding, and improving the real-time performance, validity and accuracy of information reminding.

Further more, in the above-mentioned preferred embodiment, different time intervals may be set according to different requirements. For example, when the information reminding device has a great power consumption and a fast changing standby time, the time interval may be set to be smaller, such as a few minutes; when the information for reminding is very important and the standby time is very short, the time interval may also be a few minutes; and when the standby time is very long and the information for reminding is not very important, the time interval may be a few hours, so as to ensure that the processing of the information for reminding will not be missed, thereby enhancing the use flexibility of the present invention.

On the basis of the above-mentioned preferred embodiments, the present invention provides a preferred method for acquiring the standby time of the information reminding device. Specifically, the method for acquiring the standby time of the information reminding device includes: the remaining battery capacity of the information reminding device is acquired; and the standby time of the information reminding device is calculated according to the acquired remaining battery capacity. In the present embodiment, preferably, the standby time of the information reminding device may be calculated according to the remaining battery capacity of the information reminding device when the information reminding device is started, so as to give advance reminder of the information for reminding before the information reminding device powers off due to low power, and avoid missing the processing of the information for reminding, thereby improving the validity of information reminding and improving the using value of information reminding.

On the basis of the above-mentioned preferred embodiments, the present invention provides a preferred method for acquiring the first time length between the reminding moment of the information for reminding and the acquiring moment of the standby time. Specifically, the method for acquiring the first time length between the reminding moment of the information for reminding and the acquiring moment of the standby time includes: reminding moments of all the information for reminding in the information reminding device are read; time lengths between the reminding moments of all the information for reminding and the acquiring moment of the standby time are respectively calculated; and the minimum value in the time lengths acquired via calculation is used as the first time length. In the present embodiment, time lengths between the reminding moments of all the information for reminding and the acquiring moment of the standby time are acquired, and the minimum value in the acquired time lengths is used as the first time length, so as to ensure that advance reminder of the information for reminding is given before the information reminding device powers off due to low power, and the missing of the processing of the information for reminding is avoided, thereby improving the validity of information reminding and improving the using value of information reminding.

On the basis of the above-mentioned preferred embodiments, the present invention further improves the above-mentioned information reminding method. Specifically, the information reminding method includes: it is judged whether indication information of turning off the information reminding device is received; and if yes, reminder of the information for reminding in the information reminding device is given. In the present embodiment, when the indication information of turning off the information reminding device is received, reminder of the information for reminding is given so as to avoid missing the processing of the information for reminding due to actively powering off of the information reminding device, thereby improving the validity and applicability of information reminding.

Further more, on the basis of the above-mentioned preferred embodiments, when giving reminder of the information for reminding, the information for reminding needing advance reminder may be set in advance. For example, important or essential information for reminding are selected from multiple pieces of information for reminding and subjected to advance reminder, so as to avoid missing the processing of the important information for reminding, at the same time, avoid giving advance reminder of a large amount of information for reminding. The user selects important information for reminding from the large amount of information for reminding, thereby reducing the work load of information reminding.

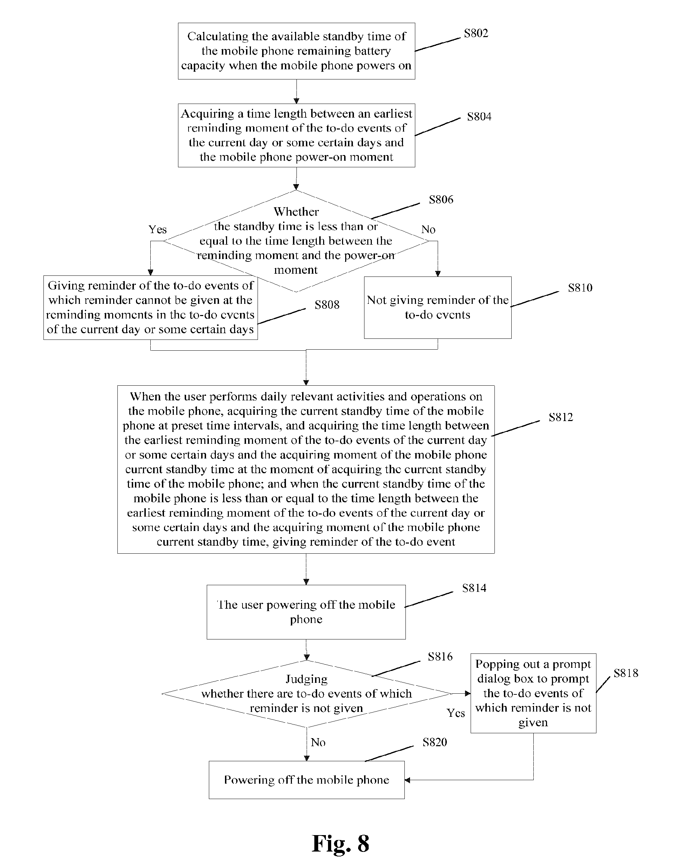

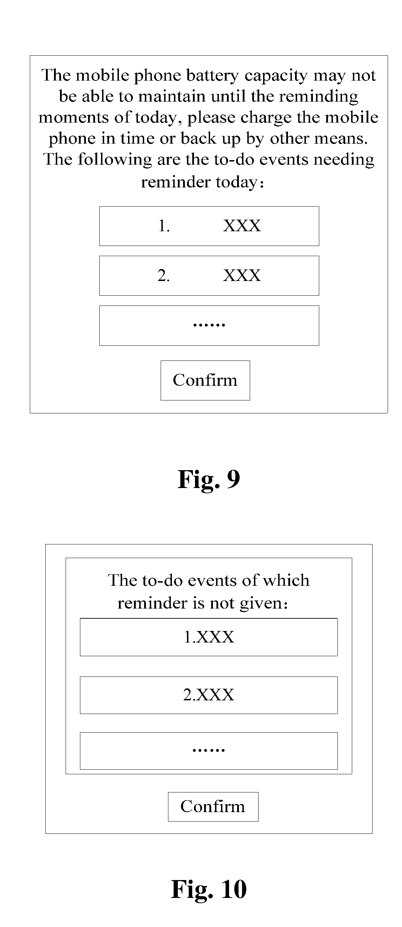

On the basis of the above-mentioned preferred embodiments, the present invention provides another preferred information reminding method. As shown in Fig. 8, the preferred embodiment is applied to but not limited to using a mobile phone as an information reminding device. Specifically, the above-mentioned information reminding method includes:
S802: powering on the mobile phone, obtaining the function curve of the mobile phone standby time and relevant corresponding relationships via the relationship between voltage and mobile phone standby time, etc., thereby specifically obtaining an available standby time RTime in the mobile phone standby case;
S804: reading and analysing, via an interface function, relevant information about to-do events (equivalent to the information for reminding) of the current day or some certain days in the calendar, wherein the relevant information includes contents such as the subjects of the to-do events, the reminding moments (TTime) of the to-do events and the reminding date of the to-do events; and obtaining, via calculation, a time length between an earliest reminding moment (TTime) of the to-do events of the current day or some certain days and the mobile phone power-on moment; furthermore, calling the performance function of the calendar back-up interface via a self-defined function; obtaining all the information about the to-do events of the current day or some certain days in the calendar; analysing and screening out, from all the information about the to-do events, relevant available information for storage; performing correlative comparison on the reminding dates of all the to-do events of the current day or some certain days via comparison algorithms; obtaining, after calculation, the earliest reminding time of all the to-do events of the current day or some certain days and assigning same to TTime;
S806: comparing the available standby time (RTime) in the mobile phone standby case with the time length between the earliest reminding moment (TTime) and the mobile phone power-on moment, judging whether the available standby time (RTime) is less than or equal to the time length between the earliest reminding moment (TTime) and the mobile phone power-on moment; if the available standby time (RTime) is less than or equal to the time length between the earliest reminding moment (TTime) and the mobile phone power-on moment, go to step S808; and if the available standby time (RTime) is greater than the time length between the earliest reminding moment (TTime) and the mobile phone power-on moment, go to step S810;
S808: if the comparison result is the available standby time (RTime) being less than or equal to the time length between the earliest reminding moment (TTime) and the mobile phone power-on moment, enumerating the to-do events of which reminder cannot be given at the reminding moments in the acquired to-do events of the current day or some certain days (the to-do events enumerated are the to-do events which are stored via acquisition, analysis, selection and comparison in step S804), acquiring the reminding moments and subjects thereof, and ordering same according to the sequence of the reminding moments, wherein the to-do events enumerated may be read via the self-defined interface into a reminding box for relevant display so as to remind the user to perform charging or other operations in time to avoid missing the processing of the to-do events; furthermore, reading the to-do events into the reminding box for relevant display may be in the form shown in Fig. 9; as shown in Fig. 9, reminding the user that the mobile phone battery capacity may not be able to maintain until the reminding moments of the current day or some certain days, and sequentially displaying the to-do events of the current day or some certain days according to the reminding moments;
S810: if the comparison result is the available standby time (RTime) being larger than the time length between the earliest reminding moment (TTime) and the mobile phone power-on moment, there is no need to perform relevant operations such as acquisition and enumeration on the to-do events, then go to step S812; since the mobile phone battery capacity is sufficient to maintain until the reminding moments of the to-do events, proceeding to a standby interface according to general operations;
S812: the user performing daily relevant activities and operations on the mobile phone, at the same time, a timer (being applied to but not limited to the timer) and mobile phone background operations running in the background of the mobile phone; the timer acquiring the current standby time of the mobile phone at preset time intervals; acquiring the time length (equivalent to the second time length) between the earliest reminding moment (TTime) of the to-do events of the current day or some certain days and the acquiring moment of the mobile phone current standby time at the moment of acquiring the current standby time of the mobile phone, and judging whether the current standby time of the mobile phone is less than or equal to the time length between the earliest reminding moment (TTime) of the to-do events of the current day or some certain days and the acquiring moment of the mobile phone current standby time; if yes, giving reminder of the to-do events, or if not, go to step S814; furthermore, the pre-processing of the to-do events is realized via the above-mentioned operations when the mobile phone powers on so as to prevent influences on the processing of the to-do events of the current day brought by the user mobile phone having insufficient battery capacity or being incapable of charging in time; this is because it makes little sense to remind the user directly that the mobile phone has insufficient battery capacity when the mobile phone has insufficient battery capacity; even though the user is reminded that the mobile phone has insufficient battery capacity, the user can not specifically learn whether reminder of the to-do events of the current day can be given in the state of insufficient battery capacity; if the reminding moments of the to-do events are within the time of remaining battery capacity in the state of insufficient battery capacity, even though the battery capacity is insufficient, it makes little sense to remind the user of the insufficient battery capacity; in addition, if emergent remedial measures, such as backup, copy and event display, are performed in this case, since the battery capacity is already insufficient, it will be possible to result in the mobile phone directly running out of electricity or there being no time to perform processing, such as backup, with such complicated electricity-consuming operations being performed in this state, thereby resulting in missing the processing of the to-do events;
S814: the user powers off the mobile phone; furthermore, when the user powers off the mobile phone due to some special reasons, such as examinations, important meetings, boarding and special environments (the user choosing to power off the mobile phone, hoping not to be bothered), whereas it's unlikely all the prior to-do events are remembered, therefore, it is necessary to process the calendar to-do events in the following step S818;
S816: judging whether there are to-do events of which reminder is not given, if yes, go to step S818, or if not, go to step S820;
S818: popping out a prompt dialog box to prompt the to-do events of which reminder is not given of the current day or some certain days; furthermore, reading and analysing the to-do events of which reminder is not given via the interface function and displaying the reminding moments and subjects thereof to prevent activities or tasks being missed and the user activities being influenced, which can also leave the user with sufficient preparation time for processing the to-do events; performing reminding of the to-do events of which reminder is not given of the current day or some certain days in the form of Fig. 10; as shown in Fig. 10, reminding the user of the to-do events of which reminder is not given, and sequentially displaying the to-do events of the current day or some certain days according to the reminding moments; furthermore, adding an Option menu, so that the user may select the to-do events needing reminder when powering off the mobile phone, or the user may select the to-do events needing reminder of which days when powering off the mobile phone; and
S820: powering off the mobile phone.

Obviously, those skilled in the art should know that each of the mentioned modules or steps of the present invention can be realized by universal computing devices; the modules or steps can be focused on single computing device, or distributed on the network formed by multiple computing devices; selectively, they can be realized by the program codes which can be executed by the computing device; thereby, the modules or steps can be stored in the storage device and executed by the computing device; and under some circumstances, the shown or described steps can be executed in different orders, or can be independently manufactured as each integrated circuit module, or multiple modules or steps thereof can be manufactured to be single integrated circuit module, thus to be realized. In this way, the present invention is not restricted to any particular hardware and software combination.

The descriptions above are only the preferable embodiment of the present invention, which are not used to restrict the present invention, for those skilled in the art, the present invention may have various changes and variations. Any amendments, equivalent substitutions, improvements, etc. within the principle of the present invention are all included in the scope of the protection as defined in the appended claims of the present invention.

## Claims

1. An information reminding method, **characterized by** comprising:
acquiring a standby time of an information reminding device;
acquiring a first time length between a reminding moment of information for reminding and an acquiring moment of the standby time;
judging whether the standby time is less than or equal to the first time length; and
if the standby time is less than or equal to the first time length, giving advance reminder of the information for reminding.

2. The method according to claim 1, **characterized in that** acquiring the standby time of the information reminding device comprises:
acquiring a remaining battery capacity of the information reminding device; and
calculating the standby time of the information reminding device according to the acquired remaining battery capacity.

3. The method according to claim 1, **characterized in that** acquiring the first time length between the reminding moment of the information for reminding and the acquiring moment of the standby time comprises:
reading reminding moments of all information for reminding in the information reminding device;
respectively calculating time lengths between the reminding moments of all the information for reminding and the acquiring moment of the standby time; and
using a minimum value in the time lengths acquired via calculation as the first time length.

4. The method according to claim 1, **characterized in that** after judging whether the standby time is less than or equal to the first time length, the method further comprises:
if the standby time is greater than the first time length, acquiring a current standby time of the information reminding device at preset time intervals;
acquiring, when acquiring the current standby time of the information reminding device, a second time length between the reminding moment of the information for reminding and an acquiring moment of the current standby time;
judging whether the current standby time is less than or equal to the second time length; and
if the current standby time is less than or equal to the second time length, giving advance reminder of the information for reminding.

5. The method according to claim 3, **characterized in that** after judging whether the standby time is less than or equal to the first time length, the method further comprises:
if the standby time is greater than the first time length, judging whether the standby time is less than or equal to a third time length, wherein the third time length is a maximum time length between the reminding moments of all the information for reminding and the acquiring moment of the standby time;
if the standby time is less than or equal to the third time length, giving advance reminder of the information for reminding, a time length between the reminding moment of which and the acquiring moment of the standby time is greater than the standby time;
if the standby time is greater than the third time length, acquiring a current standby time of the information reminding device at preset time intervals;
acquiring, when acquiring the current standby time of the information reminding device, a fourth time length between the reminding moment of the information for reminding and the acquiring moment of the current standby time, wherein the fourth time length is a minimum time length between the reminding moments of the all the information for reminding and the acquiring moment of the current standby time;
judging whether the current standby time is less than or equal to the fourth time length; and
if the current standby time is less than or equal to the fourth time length, giving advance reminder of the information for reminding.

6. The method according to any one of claims 1 to 5, **characterized by** further comprising:
judging whether indication information of turning off the information reminding device is received; and
if the indication information is received, giving reminder of the information for reminding in the information reminding device.

7. The method according to any one of claims 1 to 5, **characterized in that** the information for reminding comprises information for reminding specified to need advance reminder in multiple pieces of information for reminding.

8. An information reminding device, **characterized by** comprising:
a first acquiring unit configured to acquire a standby time of the information reminding device;
a second acquiring unit configured to acquire a first time length between a reminding moment of information for reminding and an acquiring moment of the standby time;
a first judging unit configured to judge whether the standby time is less than or equal to the first time length; and
a first processing unit configured to give advance reminder of the information for reminding if the standby time is less than or equal to the first time length.

9. The device according to claim 8, **characterized in that** the first acquiring unit comprises:
an acquiring module configured to acquire a remaining battery capacity of the information reminding device; and
a first calculating module configured to calculate the standby time of the information reminding device according to the acquired remaining battery capacity.

10. The device according to claim 8, **characterized in that** the second acquiring unit comprises:
a reading module configured to read reminding moments of all information for reminding in the information reminding device; and
a second calculating module configured to respectively calculate time lengths between the reminding moments of all the information for reminding and the acquiring moment of the standby time, and use a minimum value in the time lengths acquired via calculation as the first time length.

11. The device according to claim 8, **characterized by** further comprising:
a third acquiring unit configured to acquire, if the standby time is greater than the first time length, a current standby time of the information reminding device at preset time intervals;
a fourth acquiring unit configured to acquire, when acquiring the current standby time of the information reminding device, a second time length between the reminding moment of the information for reminding and the acquiring moment of the current standby time;
a second judging unit configured to judge whether the current standby time is less than or equal to the second time length; and
a second processing unit configured to give advance reminder of the information for reminding when the current standby time is less than or equal to the second time length.

12. The device according to claim 8, **characterized by** further comprising:
a third judging unit configured to judge, if the standby time is greater than the first time length, whether the standby time is less than or equal to a third time length, wherein the third time length is a maximum time length between the reminding moments of all the information for reminding and the acquiring moment of the standby time;
a third processing unit configured to give, when the standby time is less than or equal to the third time length, advance reminder of the information for reminding, the time length between the reminding moment of which and the acquiring moment of the standby time is greater than the standby time;
a fifth acquiring unit configured to acquire, if the standby time is greater than the third time length, a current standby time of the information reminding device at preset time intervals;
a sixth acquiring unit configured to acquire, when acquiring the current standby time of the information reminding device, a fourth time length between the reminding moment of the information for reminding and the acquiring moment of the current standby time, wherein the fourth time length is a minimum time length between the reminding moments of all the information for reminding and the acquiring moment of the current standby time;
a fourth judging unit configured to judge whether the current standby time is less than or equal to the fourth time length; and
a fourth processing unit configured to give advance reminder of the information for reminding when the current standby time is less than or equal to the fourth time length.

13. The device according to claim 8, **characterized by** further comprising:
a fifth judging unit configured to judge whether indication information of turning off the information reminding device is received; and
a fifth processing unit configured to give reminder of the information for reminding in the information reminding device when the indication information of turning off the information reminding device is judged to be received.
